Europäisches Patentamt

European Patent Office

Office européen des brevets

(19)

(11) Veröffentlichungsnummer: **0 274 071**
**A2**

# (12) EUROPÄISCHE PATENTANMELDUNG

(21) Anmeldenummer: 87118222.6

(51) Int. Cl.⁴: **G01B 7/06**

(22) Anmeldetag: 09.12.87

(30) Priorität: 08.01.87 DE 3700366

(43) Veröffentlichungstag der Anmeldung:
13.07.88 Patentblatt 88/28

(84) Benannte Vertragsstaaten:
AT BE CH DE FR GB IT LI NL SE

(71) Anmelder: LEYBOLD AKTIENGESELLSCHAFT
Wilhelm-Rohn-Strasse 25
D-6450 Hanau 1(DE)

(72) Erfinder: Benes, Ewald, Dr. techn. Dipl.-Ing.
Klosterstrasse 23
A-2362 Biedermansdorf(AT)
Erfinder: Berlinger, Paul
Jagerstrasse 62/15/8
A-1200 Wien(AT)
Erfinder: Thorn, Gernot, Dipl.-Ing.
Posener Strasse 8
D-6450 Hanau 1(DE)

(74) Vertreter: Schickedanz, Willi, Dipl.-Ing.
Langener Strasse 70
D-6050 Offenbach/Main(DE)

(54) Einrichtung zum Ermitteln der jeweiligen Dicke von sich verändernden Material-Schichten.

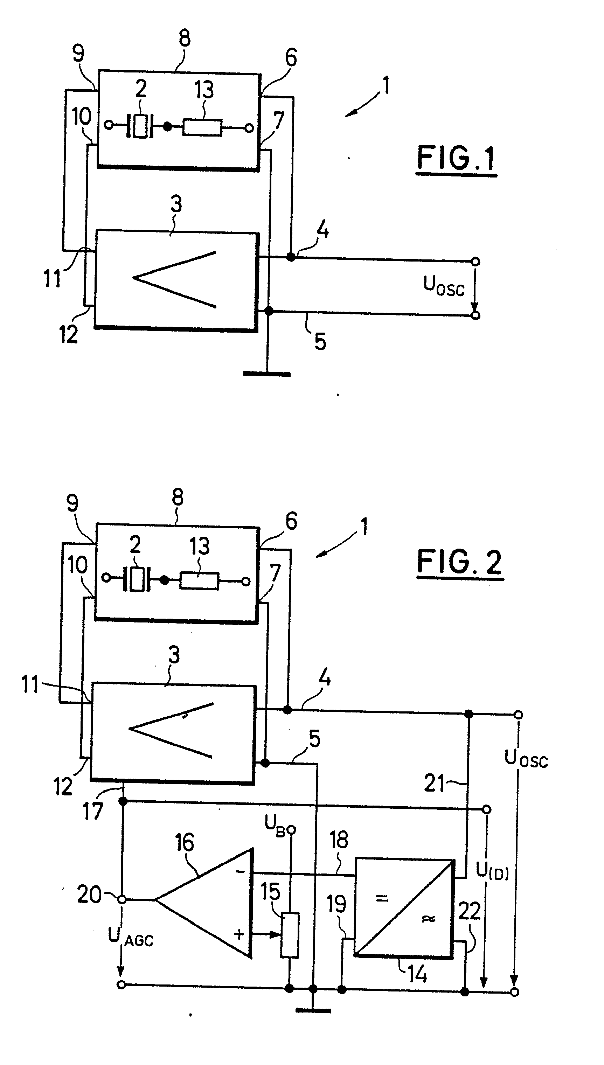

(57) Die Erfindung betrifft eine Einrichtung zum Ermitteln der jeweiligen Dicke von sich verändernden Material-Schichten auf einem Substrat, unter Verwendung eines elektrisch anregbaren, mechanisch - schwingfähigen Elements (2) mit mindestens einer ausgeprägten Resonanzfrequenz, welches von einer Oszillatorschaltung (1) auf einer Resonanzfrequenz zu einer stationären Schwingung angeregt und das in derselben Weise wie das Substrat mit dem Material beaufschlagt wird. Hierbei wird ein Signal ($U_D$) erzeugt, das von der durch die Beschichtung des - schwingungsfähigen Elements (2) hervorgerufenen Dämpfung abhängt. Dieses Signal ($U_D$) wird mit einem bekannten Grenzwertsignal ($U_{DE}$) in Bezug gesetzt, wodurch angezeigt werden kann, wann das - schwingungsfähige Element (2), das nur bis zu einem gewissen Grad mit dem Material beaufschlagbar ist, gegen ein neues schwingungsfähiges Element ausgetauscht werden muß (Fig.2).

FIG. 2

# EINRICHTUNG ZUM ERMITTELN DER JEWEILIGEN DICKE VON SICH VERÄNDERNDEN MATERIAL-SCHICHTEN

Die Erfindung betrifft eine Einrichtung zum Ermitteln der jeweiligen Dicke von sich verändernden Material-Schichten auf einem Substrat während des Beschichtungsvorgangs, insbesondere für die Herstellung dünner Schichten in der optischen und in der Halbleiter-Industrie, unter Verwendung eines elektrisch anregbaren, mechanisch schwingfähigen Elements mit mindestens einer ausgeprägten Resonanzfrequenz, welches von einer Oszillatorschaltung auf einer Resonanzfrequenz zu einer stationären Schwingung angeregt und das in derselben Weise wie das Substrat mit dem Material beaufschlagt wird.

Einrichtungen zur in situ Messung von Schichtdicken und Beschichtungsraten haben große Bedeutung für die Herstellung dünner Schichten in der optischen und in der Halbleiter-Industrie, da sie Kontrolle der Schichtdicke und Beschichtungsrate während des Beschichtungsvorganges und damit den Abbruch des Beschichtungsvorganges bei Erreichen eines bestimmten Sollwertes der Schichtdicke ermöglichen.

Derartige Einrichtungen verwenden oft als Sensorelement einen Schwingquarz-Meßkopf. Der Schwingquarz wird dabei gleichzeitig mit den zu beschichtenden Substraten beschichtet und ändert auf Grund dieser Fremdschicht-Massenbeladung seine Resonanzfrequenz. Diese Resonanzfrequenzänderung wird als hochempfindliches Maß für die aufgebrachte Schichtstärke bzw. für die Beschichtungsrate, d. h. für die Schichtdickenänderung pro Zeiteinheit, verwendet. Da sich die Resonanzfrequenz in erster Näherung proportional der Flächendichte der Fremdschichtmasse ändert, werden die erwähnten Einrichtungen auch Schwingquarz-Mikrowaagen genannt.

Diese Einrichtung zum Messen von Schichtdicken und Beschichtungsraten können grundsätzlich für alle Vakuumbeschichtungsverfahren verwendet werden; die größte technische Bedeutung haben sie jedoch beim Aufdampfverfahren. Man bezeichnet diese Einrichtungen daher auch als Aufdampfmonitore.

Zur Schwingungsanregung des Schichtdickenmeßquarzes und zur Abgabe einer Wechselspannung, deren Frequenz gleich der angeregten mechanischen Resonanzfrequenz des Quarzes ist, werden Schwingquarz-Oszillatorschaltungen verwendet.

Die Verwendungsdauer eines Meßquarzes ist begrenzt, da die auf ihm aufwachsende Fremdschicht früher oder später zu einem Aussetzen der Schwingung führt. Der Meßquarz muß dann durch einen neuen, noch unbedampften Quarz ersetzt werden. Da ein Ausfall des Quarzes während eines Aufdampfvorganges das kontrollierte Weiterbedampfen bis zum Erreichen des Schichtdickensollwertes unmöglich macht und damit die Gesamtheit der Substrate ("Charge") in der Vakuumkammer unbrauchbar wird, ist es äußerst wünschenswert, daß der Meßquarz rechtzeitig vor Beginn des Aufdampfvorganges, während dessen mit dem Ende seines Verwendungsbereichs gerechnet werden muß, ausgetauscht wird. Eine Anzeige, die in irgendeiner Form angibt, wieviel vom gesamten Verwendungsbereich des Meßquarzes bereits aufgebracht ist bzw. wieviel noch zur Verfügung steht, ist daher von großer wirtschaftlicher Bedeutung. Sie gibt gewissermaßen die Betriebssicherheitsreserve bei der jeweiligen auf den Sensorquarz aufgebrachten Materialart und -menge an.

Es ist bereits ein Meßverfahren zur Bestimmung der Dicke dünner Schichten auf einem Substrat mittels eines Schwingquarzes bekannt, der gleichzeitig mit dem Substrat beschichtet wird (DE-OS 31 45 309). Bei diesem bekannten Verfahren wird die Frequenz-bzw. die Periodendauer, die sich mit der aufwachsenden Schicht ändert, zur Bestimmung der Schichtdicke oder der Flächendichte der Masse der Schicht verwendet. Nachteilig ist bei diesem bekannten Verfahren, daß es für die Ableitung der Anzeige der Betriebssicherheitsreserve bzw. der Verbrauchszustandsänderung des Meßquarzes wenig geeignet ist.

Es ist weiterhin eine Schwingquarzmeßeinrichtung bekannt, mit der eine Bestimmung der Massendicke von Bruchteilen eines Mikrogramms bis zur Massenbeladung von einigen Milligramm durchführbar ist (H. K. Pulker: Untersuchung der kontinuierlichen Dickenmessung dünner Aufdampfschichten mit einer Schwingquarzmeßeinrichtung, Zeitschrift für angewandte Physik, 20. Band, 6. Heft, 1966, Seiten 537 bis 540). Bei dieser Meßeinrichtung ist neben einem Meßquarz-Oszillator noch ein Referenzoszillator vorgesehen. Die Ausgangssignale der beiden Oszillatoren werden auf eine erste Mischstufe gegeben, deren Ausgangssignal wiederum, zusammen mit einer Frequenz von ca. 250 KHz, auf eine zweite Mischstufe gegeben wird. Das Ausgangssignal dieser zweiten Mischstufe wird über einen Impulswandler einer digitalen Frequenzanzeige zugeführt. Die Verbrauchszustandsänderung des Meßquarzes kann mit dieser bekannten Einrichtung indessen nicht angezeigt werden.

Ferner ist eine Meßvorrichtung bekannt, mit der die Dicke aufwachsender Schichten auch während des Aufwachsvorgangs gemessen werden kann (W. H. Lawson: A versatile thin film thickness monitor of high accuracy, J. SCI. INSTRUM., 1967, Vol. 44, Heft 11, Seiten 917 bis 921). Auch mit dieser Meßvorrichtung ist es nicht möglich, die Verbrauchszustandsänderung des Meßquarzes anzuzeigen.

In den bisher bekannten Fällen wird eine derartige Anzeige von der gesamten, durch die am Quarz akkumulierte Schichtdicke verursachten, Frequenzänderung abgeleitet. Diese wurde entweder direkt angezeigt oder es wurde ein Prozentwert angezeigt, der die aktuelle Frequenzänderung $\Delta f$ bezogen auf eine weitgehend willkürlich angenommene, maximale Frequenzänderung $\Delta f_{max}$, angibt. In unzutreffender Weise wurden diese Anzeigen bisher auch als Lebensdaueranzeigen bezeichnet. Andere Aufdampfmonitore wieder zeigen die, der Frequenzänderung entsprechende, gesamte am Quarz akkumulierte Schichtdicke, z. B. in $\mu$m an.

Man kann alle bisherigen Arten der Anzeige der Betriebssicherheitsreserve oder Verbrauchszustandsänderung von Schichtdickenmeßquarzen als frequenzabhängige Anzeigen charakterisieren. Dies gilt uneingeschränkt auch für alle Geräte, die statt nach der Frequenzmeßmethode nach der sog. Periodenzeitmeßmethode arbeiten. Bei diesen wird zwar die Periodenzeitänderung der Resonanzschwingung sowohl für die Schichtdickenanzeige als auch für die Anzeige der Betriebssicherheitsreserve herangezogen, wegen des direkten Zusammenhangs zwischen der Resonanzfrequenz f und der Periodendauer 1/f kann jedoch auch hier dem Prinzip nach von ausschließlich frequenzabhängigen Anzeigen gesprochen werden.

Der große Nachteil dieser frequenzabhängigen Anzeige der Betriebssicherheitsreserven ist, daß sie die außerordentlich ausgeprägte Materialabhängigkeit der erreichbaren maximalen Meßquarz-Verwendungsdauer nicht berücksichtigen können. Mit vielen metallischen Aufdampfschichten wie z. B. Al, Ag, Cu, erreicht man, bei Verwendung üblicher Schichtdickenmeßquarze mit einer Startfrequenz von z. B. 6 MHz, Frequenzbereiche bis zum Ausfall des Quarzes von etwa 1 MHz, d. h. die Frequenz beim Quarzausfall beträgt 5 MHz, während man z. B. mit einer W-Schicht oder einer dielektrischen Schicht aus $MgF_2$ nur zu überstrichenen Frequenzbereichen bis etwa 10 kHz kommt, d. h. die Frequenz beim Quarzausfall beträgt 5,99 MHz. Darüberhinaus zeigen auch beim gleichem Aufdampfmaterial verschiedene Meßquarze oft sehr unterschiedliche Frequenzbereiche bis zum Aussetzen der Resonanzschwingung. Es liegt daher auf der Hand, daß die frequenzabhängige Anzeige der Betriebssicherheitsreserve oder Verbrauchszustandsänderung keine brauchbare Information für das rechtzeitige Auswechseln der Meßquarze liefern kann, wenn nicht zusätzliche umfangreiche Erfahrungen bzw. Statistiken für das Verhalten der verschiedenen Aufdampfmaterialien mitberücksichtigt werden und die Streuung der Meßquarze stark eingeengt wird. Damit wird aber der Zweck, nämlich ein direktes, verläßliches Maß für das rechtzeitige, aber andererseits nicht unnötig frühzeitige, Auswechseln des Meßquarzes zu liefern, von den bisherigen Verfahren und Einrichtungen nicht erreicht. Der Erfindung liegt deshalb die Aufgabe zugrunde, eine Einrichtung zu schaffen, mit der es möglich ist, ein mechanisch schwingungsfähiges Element ohne frequenzabhängige Anordnungen zu überwachen.

Diese Aufgabe wird gemäß den kennzeichnenden Merkmalen des Patentanspruchs 1 gelöst.

Der Grundgedanke der Erfindung besteht also darin, daß die bekannte frequenzabhängige Anzeige der Betriebssicherheitsreserve durch eine dämpfungsabhängige Anzeige der Betriebssicherheitsreserve ersetzt wird. Hierdurch wird der Umstand ausgenützt, daß die Ursache für den Ausfall eines Quarzes nicht das Überschreiten einer vorgegebenen Grenzfrequenz ist, sondern das Überschreiten eines bestimmten Grenzwertes der durch die aufgebrachte Schicht verursachten Quarzdämpfung.

Die Anzeige der Betriebssicherheitsreserve oder Verbrauchszustandsänderung kann in verschiedener Weise aus dem dämpfungsabhängigen Signal $U_D$ abgeleitet werden. Mann kan z. B. die Spannung $U_D$ direkt in Volt anzeigen, wobei aber wichtig ist, daß der Grenzwert von $U_D$, bei dem die Schwingung abreißt, gleichzeitig bekannt ist. Bei einer Analoganzeige kann zum Beispiel dieser Grenzwert als Marke auf der Skala eingetragen sein.

Insbesondere bei einer digitalen Anzeige ist eine prozentuelle Angabe der Betriebssicherheitsreserve $B_R$ nach der Beziehung
$$B_R\ (\%) = 100\ \% \cdot (U_{DE} - U_D)/(U_{DE} - U_{DS})$$
vorteilhaft, wobei $U_{DE}$ den Grenzwert der dämpfungsabhängigen Signalspannung für den die Schwingung gerade noch aufrechterhalten wird, $U_D$ den für die jeweilige Materialbeaufschlagung gerade auftretenden Wert der dämpfungsabhängigen Spannung und $U_{DS}$ den Wert des dämpfungsabhängigen Spannung am Beginn der erstmaligen Beschichtung des schwingfähigen Elements bedeutet. Es ist natürlich auch denkbar, anstelle der Betriebssicherheitsreserve den bereits verbrauchten Anteil (100 % - $B_R$) am Betriebssicherheitsguthaben anzugeben.

Ein sehr gut geeignetes Maß für die Angabe der Betriebssicherheitsreserve ist auch die Anzeige der bis zum Aussetzen der Schwingung noch zur Verfügung stehenden Restverwendungsdauer $t_R$ des schwingfähigen Elements entsprechend der

Beziehung

$t_R$ ($t_2$ -$t_1$) ($U_{DE}$ -$U_{D2}$)/($U_{D2}$ -$U_{D1}$),

wobei $t_2$ und $t_1$ die Zeiten am Ende bzw. Beginn des vorangegangenen Beschichtungsvorganges, $U_{D2}$ und $U_{D1}$ die Werte des Signals $U_D$ am Ende bzw. Beginn des vorangegangenen Beschichtungsvorganges sind. Hier wird der Umstand ausgenützt, daß gegen Ende der Lebensdauer des schwingfähigen Elements ein annähernd linearer Zusammenhang zwischen der Resonatordämpfung und der Beschichtungsdauer besteht.

Ein weiteres sehr gut geeignetes Maß für die Angabe der Betriebssicherheitsreserve ist auch die Anzeige der auf das schwingfähige Element bis zum Aussetzen der Schwingung noch aufbringbaren Restschichtdicke $I_R$ entsprechend der Beziehung

$1_R$ ($1_2$ -$1_1$) ($U_{DE}$ -$U_{D2}$)/($U_{D2}$ -$U_{D1}$),

wobei $1_2$ und $1_1$ die aus den jeweiligen Resonanzfrequenzwerten des schwingfähigen Elements ermittelten Schichtdicken am Ende bzw. Beginn des vorangegangenen Beschichtungsvorganges, $U_{D2}$ und $U_{D1}$ die Werte des Signals $U_D$ am Ende bzw. Beginn des vorangegangenen Beschichtungsvorganges sind. Hier wird der Umstand ausgenützt, daß gegen Ende der Lebensdauer des schwingfähigen Elements ein annähernd linearer Zusammenhang zwischen der Resonatordämpfung und der aufgebrachten Schichtdicke besteht.

Obwohl die Erfindung in der Regel mit einem Schwingquarz realisiert ist, ist sie nicht hierauf beschränkt. Statt eines Schwingquarzes können auch beliebige andere elektrisch anregbare - schwingfähige Elemente mit mindestens einer ausgeprägten Resonanzfrequenz verwendet werden, beispielsweise piezoelektrische Resonatoren aus Lithiumniobat oder dergleichen.

Ausführungsbeispiele der Erfindung sind in der Zeichnung dargestellt und werden im folgenden näher beschrieben. Es zeigen:

Fig. 1 ein Blockschaltbild eines herkömmlichen Quarz-Oszillators;

Fig. 2 ein Blockschaltbild eines Oszillators zur Realisierung der Erfindung;

Fig. 3 den funktionalen Zusammenhang zwischen der Verstärkungssteuerspannung $U_{AGC}$ und dem Serienresonanzwiderstand $R_D$ des Schwingquarzes;

Fig. 4 ein detailliertes Ausführungsbeispiel des Blockschaltbildes nach Fig. 2.

Fig. 5 ein weiteres Ausführungsbeispiel, welches einen amplitudengeregelten Oszillator voraussetzt;

Fig. 6 ein Ausführungsbeispiel, welches keinen amplitudengeregelten Oszillator voraussetzt;

Fig. 7 eine Schaltungsanordnung, bei der zwischen einer Oszillatorschaltung und einer Auswerteschaltung ein Koaxialkabel vorgesehen ist, welches zur gleichzeitigen Gleichstrom-, Niederfrequenz-und Hochfrequenzübertragung dient.

Das Blockschaltbild eines herkömmlichen Oszillatorschaltkreises 1 für die Anregung eines Schwingquarzes 2 ist in Fig. 1 gezeigt. Es besteht aus einem Verstärker 3, dessen Ausgangsleitungen 4,5 mit den Engängen 6,7 eines Rückkopplungsnetzwerks 8 verbunden ist. Die Ausgangsleitungen 9,10 dieses Rückkopplungsnetzwerks 8 sind mit den Eingängen 11,12 des Verstärkers 3 verbunden.

Der Schwingquarz zeigt bekanntlich das Verhalten eines Resonanzkreises, und zwar besitzt er eine Serien-und eine Parallelresonanzfrequenz (Beuth/Schmusch: Grundschaltungen der Elektronik, Band 3, 1981, S. 270-272; Zinke/Brunswig: Lehrbuch der Hochfrequenztechnik, 1965, S. 41-45). In Serienresonanz wirkt der Schwingquarz wie ein ohmischer Widerstand von wenigen Ohm. Bei Parallelresonanz ist er ein sehr hochohmiger Widerstand. Im folgenden wird nur der Fall der Serienresonanz betrachtet, obwohl sich all Überlegungen sinngemäß auch auf den Parallelresonanzfall übertragen lassen.

Das Rückkopplungsnetzwerk 8 enthält als frequenzbestimmendes Element den Schwingquarz 2, dessen Verlustwiderstand mit 13 bezeichnet ist.

Wird der Schwingquarz 2 mit einer Fremdschicht beladen, so nimmt der Wert des Widerstands 13 zu. In einem Schaltbild könnte dies durch eine Reihenschaltung eines zusätzlichen Widerstands zum Widerstand 13 dargestellt werden. Durch die Fremdschichtbeladung erniedrigt sich die Serienresonanzfrequenz. Neben der Resonanzfrequenzänderung bewirkt die Fremdschicht auf dem Quarz auch eine Zunahme der Resonatordämpfung, die als Verhältnis der Verlustleistung zur Blindleistung definiert ist.

Der Umstand, daß sich der gesamte Verlustwiderstand des Schwingquarzes aus der Reihenschaltung des Verlustwiderstandes 13 des unbeladenen Quarzes 2 und des durch die Fremdschicht verursachten Verlustwiderstandes ergibt; läßt sich durch folgende Gleichung ausdrücken:

$R_D = R_S + R_F$

wobei $R_D$ der gesamte Verlustwiderstand, $R_S$ der Verlustwiderstand des unbeladenen Quarzes und $R_F$ der durch die Fremdschicht verursachte Verlustwiderstand ist.

Der Widerstandswert $R_D$ nimmt die Impedanz des beladenen Schwingquar zes 2 an, wenn er exakt auf seiner Serienresonanz betrieben wird. Für diesen Fall erreicht der Betrag der Schleifenverstärkung $U_{11,12}$ zwischen den Eingängen 11,12 des Verstärkers 3 und den Ausgängen 9,10 des Rückkopplungsnetzwerkes 8 - bei aufgetrennt gedachter Verbindung zwischen diesen Eingängen und diesen Ausgängen - den maximalen Wert. Solange der Betrag der Schleifenverstärkung größer oder gleich eins ist und keine Phasendrehung zwischen den Eingägen 11,12 und den Ausgängen 11,12 auftritt, wird - bei wieder verbundenem Eingang und Ausgang - die Schwingung aufrechterhalten und es steht an den Ausgangsleitungen 4,5 der Oszillatorschaltung 1 eine Wechselspannung $U_{Osc}$ mit der Frequenz der mechanischen Resonanzschwingung des Schwingquarzes zur Verfügung.

Eine Besonderheit von Oszillatorschaltkreisen für Schichtdickenmeßquarze besteht darin, daß sie für einen außerordentlich hohen Dämpfungsbereich ausgelegt sein müssen. So ändert sich der Serienresonanzwiderstand $R_D$ von typischerweise $R_{Dmin} = R_S = 20$ Ohm für den unbeladenen Quarz bis $R_{Dmax} = 1,5$ Ohm für den hochbeladenen Quarz am Ende seiner Verwendungsdauer. Dieses Problem wird üblicherweise durch "Überrückkopplung" gelöst, das heißt, der Betrag der Schleifenverstärkung wird beim unbeladenen Quarz weit größer als eins gewählt und erreicht erst am Ende der Verwendungsdauer den Grenzwert I. Solche Oszillatoren liefern durch die ausgeprägte Übersteuerung ein stark verzerrtes Ausgangssignal, das erst gegen Ende des Verwendungsbereichs sinusförmig wird. Eine andere Möglichkeit ist die Verwendung eines amplitudengeregelten Oszillators mit einem entsprechend großen Regelbereich. Ein solcher Oszillator liefert eine sinusförmige Wechselspannung mit einer über den gesamten Verwendungsbereich annähernd konstanten Amplitude.

In der Fig. 2 ist eine Schaltungsanordnung gezeigt, mit der eine dämpfungsabhängige Spannung bei einem amplitudengeregelten Oszillator 1 gewonnen wird. Das Prinzip des amplitudengeregelten Oszillators ist an sich von Präzisions-Schwingquarzoszillatoren für Frequenznormale her bekannt. Es wird dabei die an den Ausgängen 4,5 des Verstärkers 3 abgegebene Wechselspannung über eine Gleichrichterschaltung 14 gleichgerichtet und die erhaltene Gleichspannung mit einer Referenzspannung, die meist über einen einstellbaren Spannungsteiler 15 aus einer Betriebsspannung $U_B$ abgeleitet wird, verglichen. Die Abweichung wird über einen Differenzverstärker 16 verstärkt und dient als Steuergleichspannung $U_{AGC}$ für den Verstärker 3, der eine von der an seinem Steuereingang 17 anliegenden Spannung abhängige Verstärkung für die an den Verstärkereingängen 11,12 anliegende Wechselspannung aufweist.

Bei Verwendung eines derartigen Oszillators für die Anregung von Schichtdickenmeßquarzen vergrößert sich mit zunehmender Fremdschichtbeladung des Quarzes der Dämpfungswiderstand $R_D$; dies würde an sich zu einem Absinken der Ausgangsspannung $U_{Osc}$ führen. Ein Absinken der Ausgangsspannung $U_{Osc}$ verursacht aber eine Abnahme der Gleichspannung an den Ausgängen 18,19 der Gleichrichterschaltung 14, dies wiederum bewirkt eine Zunahme der Spannung $U_{AGC}$ am Ausgang 20 des Differenzverstärkers 16, was schließlich eine Erhöhung des Verstärkungsfaktors zur Folge hat, die ein Absinken der Ausgangsspannung $U_{Osc}$ weitgehend ausregelt. Man kann auch von einem Gleichbleiben der Schleifenverstärkung sprechen, da die stärkere Abschwächung im Rückkopplungsnetzwerk durch eine Erhöhung des Verstärkungsfaktors kompensiert wird.

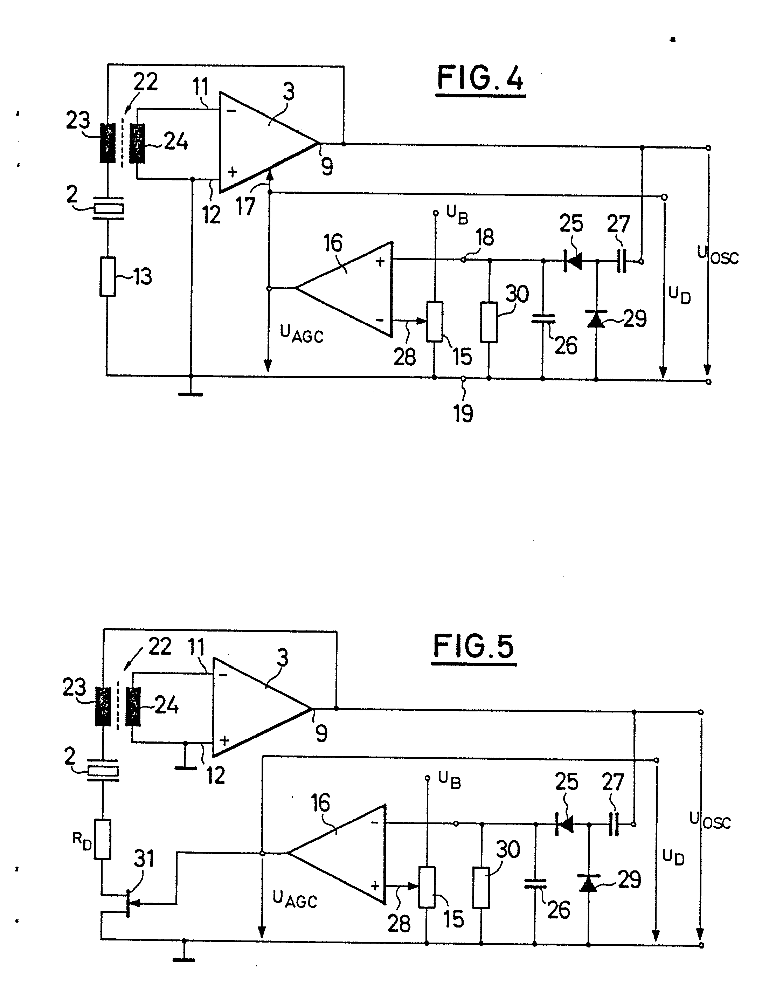

Fig. 3 zeigt den typischen Verlauf der Steuerspannung $U_{AGC}$ als Funktion des Serienresonanzwiderstands $R_D$. Dabei sind verschiedene Koordinatenpunkte hervorgehoben, die durch $U_{AGCmax}$, $U_{AGCmin}$, $R_{DS}$ und $R_{DE}$ definiert sind. $R_{DS}$ bedeutet hierbei den Widerstand zu Beginn der zusätzlichen Dämpfung, während $R_{DE}$ den Widerstand am Ende der zusätzlichen Dämpfung bedeutet. Da ein direkter funktionaler Zusammenhang zwischen dem Serienresonanzwiderstand $R_D$ und der für die Aufrechterhaltung der Schwingung erforderlichen Verstärkung des Verstärkers 3 besteht und da die Verstärkung wiederum eine Funktion der Steuerspannung $U_{AGC}$ ist, kann die Steuerspannung als dämpfungsabhängige Spannung $U_D$ bezeichnet werden. Im Idealfall ändert sich die Spannung $U_D$ proportional zur Dämpfung; im allgemeinen ist der Zusammenhang jedoch nichtlinear. Die Abweichung von der Linearität wird in erster Linie vom funktionalen Zu sammenhang zwischen der Verstärkungssteuerspannung $U_{AGC}$ und der Schleifenverstärkung bestimmt. Für die Ableitung einer geeigneten dämpfungsabhängigen Verwendungsdaueranzeige genügt eine sich mit der Dämpfung monoton ändernde Spannung, das heißt die Kurve darf nur keine Extrema und Wendepunkte aufweisen, die Spannung muß mit stetig steigender Dämpfung stetig ansteigen oder abfallen.

Fig. 4 zeigt ein detailliertes Oszillatorschaltbild zur Gewinnung der dämpfungsabhängigen Spannung $U_D$. Als Verstärker 3 bzw. 16 werden Differenzverstärker verwendet. Bei Verstärker 16 sind der invertierende Eingang (-) und nichtinvertierende Eingang (+) gegenüber der Fig. 2 vertauscht, da das Realisierungsbeispiel (MC 1590 von Motorola) für den Verstärker 3 eine negative Verstärkungsregelcharakteristik hat; das heißt, mit zunehmender Steuerspannung $U_{AGC}$ sinkt die Verstärkung. Das Rückkopplungsnetzwerk besteht aus einem Übertrager 22, dessen Primärseite 23 in Serie zum Meßquarz 2 am Ausgang 9 des Verstärkers 3 und dessen Sekundärseite 24 am Eingang 11,12 dieses Verstärkers 3 angeschlossen ist. Als Gleichrichterschaltung wird eine Einwegschaltung verwendet. Die Diode 25 lädt während jeder positiven Halbwelle einen Ladekondensator 26 auf. Der Koppelkondensator 27 dient nur zur Trennung der Gleichstrompotentiale am Ausgang 9 des Verstärkers 3 und am invertierenden Eingang 28 des Verstärkers 16. Eine Diode 29 ermöglicht den Wechselstromfluß über den Koppelkondensator 27, da sie jeweils die negative Halbwelle durchläßt. Der Widerstand 30 ist so bemessen, daß er einerseits wesentlich größer als der Ausgangswiderstand des Verstärkers 3 ist, andererseits mit dem Ladekondensator 26 eine hinreichend kleine Zeitkonstante ergibt, damit bei einem plötzlichen Dämpfungsanstieg die Regelung hinreichend rasch reagiert. Die angegebene Gleichrichterschaltung arbeitet praktisch als Spitzenwertgleichrichter, d. h. die erzeugte Gleichspannung ist bis auf den durch die Diodendurchlaßspannung verursachten Spannungsabfall praktisch gleich der Amplitude der Wechselspannung $U_{Osc}$.

Fig. 5 zeigt eine Variante der Schaltung von Fig. 4, die dann vorteilhaft ist, wenn man als Verstärker 3 einen normalen Differenzverstärker mit nur fest einstellbarer Verstärkung verwenden will. Der notwendige Ausgleich des Anstiegs des Dämpfungswiderstands $R_D$ wird hier durch die Reihenschaltung eines veränderlichen Kompensationswiderstandes, der durch die Source-Drain-Strecke eines Feldeffekt-Transistors 31 realisiert werden kann, erreicht. Der Widerstand der Source-Drain-Strecke dieses Feldeffekt-Transistors 31 läßt sich durch Anlegen einer Steuerspannung $U_{AGC}$ an den Gate-Anschluß in weiten Grenzen variieren. Die durch die Fremdschichtbeladung des Meßquarzes 2 bewirkte Zunahme des Dämpfungswiderstandes $R_D$ wird durch eine - über den Anstieg der Gate-Spannung bewirkte - Verringerung des Kompensationswiderstandes über den gesamten Verwendungsbereich weitgehend ausgegliche, bzw. es wird die Schleifenverstärkung konstant gehalten. Die Drain-Source-Strecke des Feldeffekt-Transistor 31 muß dabei nicht unbedingt direkt in Serie zum Quarz geschaltet werden, der gleiche Zweck wird erreicht, wenn sie in Serie zur Sekundärwicklung 24 des Übertragers 22 oder an einer beliebigen anderen Stelle eines komplexeren Rückkopplungsnetzwerkes eingesetzt wird. Entscheidend ist nur, daß die Schleifenverstärkung direkt vom Widerstand der Drain-Source-Strecke abhängt.

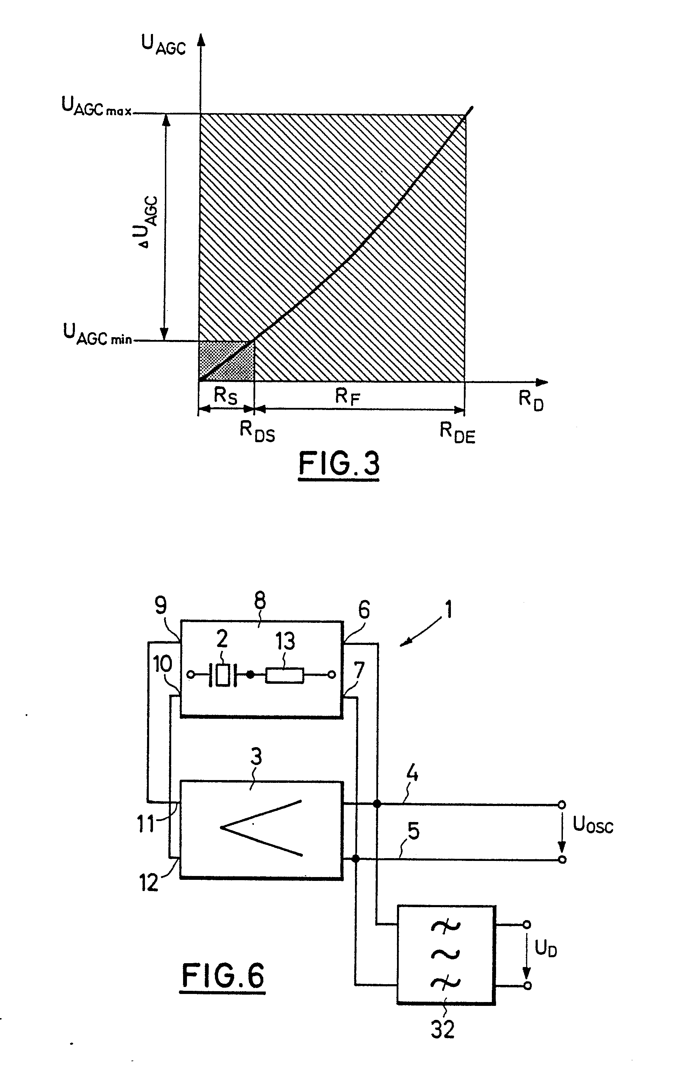

In Fig. 6 ist gezeigt, wie bei einem nicht-amplitudengeregelten, also bei einem mit "Überrückkopplung" arbeitenden Oszillatorschaltkreis 1 ein dämpfungsabhängiges Signal gewonnen werden kann. Hierzu wird an den Ausgängen 4,5 eines solchen Oszillators 1 ein Oberwellenfilter 32 angeschlosen. Dieses muß als relativ breitbandiger Bandpaß ausgeführt werden, da sich mit zunehmender Fremdschichtbeladung die Oberwellenfrequenz ändert. Mit zunehmender Fremdschichtbeladung vergrößert sich der Dämpfungswiderstand $R_D$, wodurch der Abschwächungsfaktor des Rückkopplungsnetzwerkes 8 steigt, die Schleifenverstärkung entsprechend sinkt und das Ausmaß der Überrückkopplung abnimmt. Geringere Übersteuerung bedeutet aber geringere Verzerrungen der Ausgangsspannung $U_{Osc}$. Dies hat eine Verringerung der Amplituden im Oberwellenspektrum zur Folge. Die Amplitude des Ausgangssignals des Oberwellenfilters 32 kann daher als dämpfungsabhängige Spannung $U_D$ verwendet werden, da sie mit zunehmender Meßquarzdämpfung monoton abnimmt. Selbstverständlich kann durch Nachschalten einer in der Fig. 6 nicht dargestellten Gleichrichterschaltung wieder eine dämpfungsabhängige Gleichspannung erzeugt werden. Wegen der bei diesem Oszillatortyp zunächst annähernd rechteckförmigen Ausgangsspannung $U_{Osc}$ wird aus dem Oberwellenspektrum vorteilhaft die 3. Harmonische ausgefiltert, da diese gemäß Fourier-Analyse die größte Amplitude aufweist. Bei den typischerweise verwendeten Schichtdicken-Meßquarzen mit einer Start-Grundfrequenz von 6 MHz muß das Oberwellenfilter 32 für einen Frequenzbereich von etwa 15 bis 18 MHz ausgelegt werden. Geeignet sind insbesondere Bandfilter, wie sie von der Rundfunktechnik her bekannt sind, z. B. als Zwischenfrequenzfilter, die aus zwei induktiv gekoppelten Parallelschwingkreisen aufgebaut sind und die eine Mittenfrequenz von 16,5 MHz aufweisen.

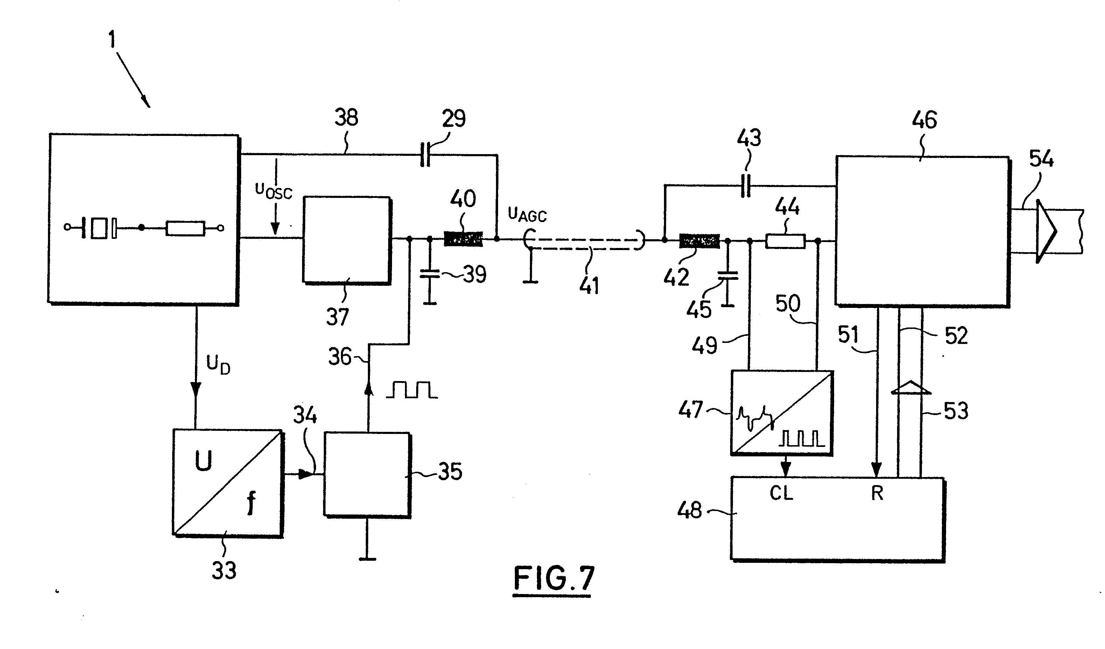

In der Fig. 7 ist eine Schaltungsanordnung dargestellt, welche eine Oszillatorschaltung 1 und eine Auswerteschaltung zeigt, die über ein Koaxialkabel 41 miteinander verbunden sind. Das Koaxialkabel 41 dient hierbei nicht für die Übertragung der Versorgungs-Gleichspannung und der hochfrequenten Signale, sondern auch zur Übertragung von niederfrequenten Signalen.

Die von der Oszillatorschaltung 1 erzeugte dämpfungsabhängige Gleichspannung $U_D$ wird hierbei einem Spannungs-Frequenz-Wandler 33 zugeführt und von diesem in eine Niederfrequenz-Spannung umgewandelt. Diese Niederfrequenz-Spannung gelangt auf eine weitere Umformeinrichtung 35, welche die Niederfrequenzspannung in einen rechteckförmigen Niederfrequenz-Strom unformt. Dieser Niederfrequenz-Strom wird über ein Tiefpaßfilter, das aus einer Drossel 40 und einem Kondensator 39 besteht, auf das Koaxialkabel 41 gegeben. Hinter dem Tiefpaßfilter 39,40 wird die hochfrequente Oszillatorspannung $U_{Osc}$ über einen Kondensator 29 ebenfalls in das Koaxialkabel 41 eingespeist. Zwischen dem Tiefpaßfilter 39, 40 und der Oszillatorschaltung 1 ist ein Spannungsregler 37 vorgesehen.

Auf der Eingangsseite der Auswerteschaltung ist ebenfalls ein Tiefpaßfilter vorgesehen, das aus der Drossel 42 und dem Kondensator 45 besteht. Zwischen diesem Tiefpaßfilter 42,45 und einem Eingang einer Hochfrequenz-Auswerteschaltung 46 liegt ein Widerstand 44, dessen Spannungsabfall einem Impulsformer 47 zugeführt ist. Der Verbindungspunkt zwischen dem Koaxialkabel 41 und der Drossel 42 ist über einen Kondensator 43 mit einem anderen Eingang der Hochfrequenz-Auswerteschaltung 46 verbunden.

Der Impulsformer 47 wandelt die eingehenden Impulse in Rechteckimpulse um, die von einem Digitalzähler 48, beispielsweise einem 2 x BCD-Zähler, verarbeitet werden können. Dieser Digitalzähler 48 ist seinerseits wiederum über Datenleitungen 51,52,53 mit der HF-Auswerteschaltung 46 verbunden. Von der HF-Auswerteschaltung 46 werden aufgrund der erhaltenen Signale Daten erzeugt, die zur endgültigen Auswertung und Anzeige über einen Datenbus 54 beispielsweise einem Personal Computer zugeführt werden.

Die zweite Schaltungsanordnung, welche das elektrische Signal $U_D$ auf ein vorgegebenes Grenzwertsignal $U_{DE}$ dieses Signals $U_D$ bezieht, kann in bekannter und vielfältiger Weise realisiert werden, weshalb sie im vorliegenden Fall nicht detailliert dargestellt und beschrieben ist. Entsprechendes gilt für die eigentliche Anzeigeschaltung und -einrichtung.

## Ansprüche

1. Einrichtung zum Ermitteln der jeweiligen Dicke von sich verändernden Material-Schichten auf einem Substrat während des Beschichtungsvorgangs, insbesondere für die Herstellung dünner Schichten in der optischen und in der Halbleiter-Industrie, unter Verwendung eines elektrisch anregbaren, mechanisch schwingfähigen Elements mit mindestens einer ausgeprägten Resonanzfrequenz, welches von einer Oszillatorschaltung auf einer Resonanzfrequenz zu einer stationären Schwingung angeregt und das in derselben Weise wie das Substrat mit dem Material beaufschlagt wird, **gekennzeichnet durch** die Kombination folgender Merkmale:

a) eine erste Schaltungsanordnung (3, 8, 14, 16) welche ein elektrisches Signal ($U_D$) erzeugt, das sich monoton mit der durch die Beschichtung des schwingungsfähigen Elements (2) hervorgerufenen Dämpfung der mechanischen Resonanz ändert;

b) eine zweite Schaltungsanordnung, welche das elektrische Signal ($U_D$) dieses Signals ($U_D$) bezieht, wobei dieses Grenzwertsignal ($U_{DE}$) auf ein vorgegebenes elektrisches Grenzwertsignal ($U_{DE}$)

bei einer Grenzdämpfung auftritt, bei welcher das schwingungsfähige Element (2) gerade noch zu einer stationären Schwingung angeregt werden kann;

c) eine Einrichtung, welche die Beziehung zwischen dem sich ändernden Signal ($U_D$) und dem fest vorgegebenen elektrischen Signal ($U_{DE}$) als Verbrauchszustandsänderung des schwingungsfähigen Elements (2) anzeigt.

2. Einrichtung nach Anspruch 1, dadurch gekennzeichnet, daß ein Verhältnis aus Differenzen von Signalwerten gebildet wird, wobei im Zähler die Differenz zwischen dem Grenzwert des Signals ($U_{DE}$) und dem jeweiligen Wert des Signals ($U_D$) steht, während im Nenner die Differenz aus dem Grenzwert des Signals ($U_{DE}$) und dem Wert des Signals ($U_{DS}$) vor Beginn der ersten Materialbeaufschlagung steht, und daß dieses mit 100 multiplizierte Verhältnis als prozentuelles Maß für die Verbrauchszustandsänderung des schwingungsfähigen Elements (2) angezeigt wird.

3. Einrichtung nach Anspruch 1, dadurch gekennzeichnet, daß ein Verhältnis aus Differenzen von Signalwerten gebildet wird, wobei im Zähler die Differenz aus dem Grenzwert des Signals ($U_{DE}$) und dem Wert des signals ($U_{D2}$) am Ende eines vorangegangenen Beschichtungsvorgangs steht, während im Nenner die Differenz aus den Werten am Ende ($U_{D2}$) und Beginn ($U_{D1}$) dieses vorangegangenen Beschichtungsvorgangs steht, und daß dieses Verhältnis mit der Zeitdauer dieses Beschichtungsvorgangs multipliziert und das Ergebnis als die, bis zum Aussetzen der Schwingung zu erwartende, Restverwendungsdauer des schwingfähigen Elements (2) angezeigt wird.

4. Einrichtung nach Anspruch 1, dadurch gekennzeichnet, daß ein Verhältnis aus Differenzen von Signalwerten gebildet wird, wobei im Zähler die Differenz aus dem Grenzwert des Signals ($U_{DE}$) und dem Wert des Signals ($U_{D2}$) am Ende eines vorangegangenen Beschichtungsvorgangs steht, während im Nenner die Differenz aus den Werten am Ende ($U_{D2}$) und Beginn ($U_{D1}$) dieses vorangegangenen Beschichtungsvorgangs steht, und daß dieses Verhältnis mit der während des Beschichtungsvorgangs aufgebrachten Schichtdicke multipliziert und das Ergebnis als die bis zum Aussetzen der Schwingung voraussichtlich noch aufbringbare Schichtdicke angezeigt wird.

5. Einrichtung nach einem der vorangehenden Ansprüche, dadurch gekennzeichnet, daß das schwingfähige Element ein piezoelektrischer Resonator ist.

6. Einrichtung nach Anspruch 5, dadurch gekennzeichnet, daß das schwingfähige Element ein Schwingquarz (2) ist.

7. Einrichtung nach einem der vorangehenden Ansprüche, dadurch gekennzeichnet, daß die Oszillatorschaltung (1) einen Regelkreis (3,8,14,16) enthält, der die Amplitude der von der Oszillatorschaltung (1) erzeugten Wechselspannung ($U_{OSC}$) innerhalb eines festen Bereichs der Schwingquarzdämpfung konstant hält, wobei die Steuerspannung ($U_{AGC}$) für die Schleifenverstärkung ($G_S$) als dämpfungsabhängiges Signal ($U_D$) verwendet wird.

8. Einrichtung nach Anspruch 7, dadurch gekennzeichnet, daß die Oszillatorschaltung (1) einen Verstärker (3) enthält, der als integrierter Differenzverstärker mit einem über eine Steuerspannung ($U_{AGC}$) veränderlichen Verstärkungsfaktor ($G_A$) verwendet wird.

9. Einrichtung nach Anspruch 7, dadurch gekennzeichnet, daß zur Erzielung einer durch die Steuerspannung ($U_{AGC}$) veränderlichen Schleifenverstärkung ($G_S$) ein durch einen Feldeffekt-Transistor (31) realisierter spannungsgesteuerter Widerstand verwendet wird.

10. Einrichtung nach einem der Ansprüche 1-6, dadurch gekennzeichnet, daß durch ein Filter (32) eine Oberwelle aus der Wechselspannung ($U_{Osc}$) herausgefiltert und die Amplitude dieses Signals als dämpfungsabhängige Spannung ($U_D$) verwendet wird.

11. Einrichtung nach einem der vorangegangenen Ansprüche, dadurch gekennzeichnet, daß das Unterschreiten eines bestimmten, vorwählbaren Grenzwertes der Verbrauchszustandsänderung ein akustisches und/oder optisches Signal, welches zum rechtzeitigen Auswechseln des schwingungsfähigen Elements (2) auffordert, auslöst.

12. Einrichtung nach Anspruch 1, dadurch gekennzeichnet, daß ein Koaxialkabel (41) vorgesehen ist, das sowohl für die Gleichstromversorgung, als auch für die Hochfrequenz-und Niederfrequenzübertragung vorgesehen ist.

13. Einrichtung nach Anspruch 12, dadurch gekennzeichnet, daß durch einen Spannungs/Frequenz-Wandler (33) aus der dämpfungsabhängigen Spannung ($U_D$) ein niederfrequentes Wechselspannungssignal (NF) erzeugt wird, dessen Frequenz sich monoton mit der dämpfungsabhängigen Spannung ($U_D$) ändert und das stromeingeprägt in das gleiche Koaxialkabel (41) eingespeist wird, über das die Spannungsversorgung (DC) des Oszillators und die spannungseingeprägte Übertragung der Oszillatorwechselspannung ($U_{Osc}$) erfolgt.

0 274 071

FIG.1

$U_{OSC}$

FIG.2

$U_{OSC}$

$U_B$

$U_{(D)}$

$U_{AGC}$

## FIG.4

## FIG.5

FIG.3

FIG.6

FIG.7